# EUROPÄISCHE PATENTSCHRIFT

(11) **EP 3 853 085 B1**
(45) Veröffentlichungstag und Bekanntmachung des Hinweises auf die Patenterteilung: **01.11.2023**
(21) Anmeldenummer: 19758945.0
(22) Anmeldetag: 22.08.2019
(51) Int. Cl.: B60T 7/22

(54) **VERFAHREN ZUR NOTBREMSUNG EINES EIGENFAHRZEUGS UND NOTBREMSSYSTEM**
METHOD FOR THE EMERGENCY BRAKING OF AN EGO-VEHICLE AND EMERGENCY BRAKING SYSTEM
PROCÉDÉ DE FREINAGE D'URGENCE D'UN VÉHICULE PERSONNEL ET SYSTÈME DE FREINAGE D'URGENCE

(30) Priorität: 18.09.2018 DE 102018122865
(43) Veröffentlichungstag der Anmeldung: 28.07.2021
(73) Patentinhaber: ZF CV Systems Europe BV, 1170 Brussels (BE)
(72) Erfinder: DIECKMANN, Thomas, 30982 Pattensen (DE); KALLENBACH, Stephan, 30161 Hannover (DE)
(74) Vertreter: Rabe, Dirk-Heinrich
(86) Internationale Anmeldenummer: PCT/EP2019/072421
(87) Internationale Veröffentlichungsnummer: WO 2020/057888

(56) Entgegenhaltungen:
- EP-A2- 2 287 059
- US-A1- 2012 239 265
- US-A1- 2014 052 355
- US-B1- 9 959 762

## Beschreibung

Die Erfindung betrifft ein Verfahren zur Notbremsung eines Eigenfahrzeugs und ein Notbremssystem.

Als Notbremssysteme sind insbesondere AEBS (Advanced Emgergency Brake Systems) bekannt, die zunächst in einem Bereitschafts-Modus MessSignale eines Umfeld-Erfassungssystems, insbesondere Abstandssignale, aufnehmen und auswerten, und bei Erkennen einer Notbremssituation, d.h. insbesondere eines unmittelbar bevorstehenden bzw. drohenden Unfalls, der vom Fahrer voraussichtlich nicht mehr oder nicht mehr alleine verhindert werden kann, aktiv werden. Für ein AEBS ist eine AEBS-Kaskade vorgesehen, gemäß der vor der Notbremsung, z.B. mindestens 1,4 sec vorher, zunächst eine erste Warnung ausgegeben wird, z. B. optisch, akustisch oder haptisch. Hierdurch wird dem Fahrer die Gelegenheit gegeben, hierauf zu reagieren; so kann der Fahrer z. B. je nach Verkehrssituation einen Ausweichvorgang einleiten und die Fahrspur wechseln, oder selbst eine Bremsung einleiten. Nach der ersten Warnung wird im Allgemeinen eine Teilbremsung eingeleitet, d.h. eine Bremsung mit begrenzter Bremskraft. Kurz vor der Notbremsung wird eine zweite Warnung ausgegeben und dann die Notbremsung als Vollbremsung, d.h. mit vollem Bremsdruck, eingeleitet.

Bei Platooning-Systemen bzw. Systemen zur Einleitung einer automatisierten Konvoifahrt (Kolonnenfahrt) stehen zwei oder mehr Fahrzeuge miteinander in einer Datenverbindung (V2V, Vehicle-to-Vehicle-Communication). Hierdurch können die Fahrzeuge des Verbundes bzw. Konvois miteinander kommunizieren, so dass z. B. das Vorderfahrzeug eine unmittelbar bevorstehende oder eingeleitete Bremsung den hinteren Fahrzeugen sofort mitteilt, so dass die hinteren Fahrzeuge nicht erst den Bremsvorgang des vorderen Fahrzeugs detektieren müssen, sondern sofort einen entsprechenden Bremsvorgang, insbesondere mit einander angepassten Bremsdrücken bzw. Soll-Verzögerungen, einleiten können. Derartige Platooning-Systeme erlauben sehr geringe Abstände von z. B. 15 m zu dem jeweiligen Vorderfahrzeug und hierdurch eine deutliche Kraftstoffersparnis. Sie setzen jedoch eine entsprechende V2V-Datenverbindung zwischen den Fahrzeugen mit normierten Befehlssätzen voraus, wobei auch die technische Ausstattung, z. B. der Zustand der Bremsen, hinreichend angepasst sein muss.

Autonome Abstandsregelsysteme (ACC, Adaptive Cruise Control) dienen als Komfortsysteme und weisen im Allgemeinen ein Umfeld-Erfassungssystem wie z. B. eine Radareinrichtung auf, um durch autonome Brems- und auch Motoreingriffe einen Abstand zum Vorderfahrzeug konstant zu regeln. Als Komfortsysteme sind die maximale Verzögerung und die Bremsrampen, d.h. die zeitliche Änderung der Verzögerung, begrenzt.

Auch treten Probleme bei den üblichen Umfeld-Erfassungssystemen auf Basis von Radar-Detektoren oder Radar-Messgeräten auf. So können Radar-Systeme z. B. Objekte fälschlicherweise als stationäre Hindernisse erkennen, z. B. Brücken. Auch Metalldosen oder -folien können fälschlicherweise als kollisionsbegründende stationäre Objekte erkannt werden. Auch hierdurch ist die Warnkaskade begründet und somit der Performance von AEBS-Systemen Grenzen gesetzt.

Aus der US20140052355A1 ist ein Verfahren zum Erfassen kritischer Fahrsituationen von Kraftfahrzeugen, insbesondere zum Verhindern von Kollisionen mit einem Objekt vor einem eigenen Fahrzeug bekannt, das folgende Schritte aufweist: Erfassen einer aktuellen Fahrzeugbeschleunigung und einer aktuellen Fahrzeuggeschwindigkeit eines eigenen Fahrzeugs; Vorgabe eines Beschleunigungsprofils in Abhängigkeit von Fahrgrößen des eigenen Fahrzeugs; Annahme eines zeitlichen Verlaufs einer absehbaren Beschleunigung des eigenen Fahrzeugs anhand seiner aktuellen Beschleunigung; Bestimmen eines Bahnprofils des eigenen Fahrzeugs aus dem zeitlichen Verlauf der absehbaren Beschleunigung. Weiter wird ein Objekt vor dem eigenen Fahrzeug erfasst und dessen Bahnprofil abgeschätzt. Aus dem Schnittpunkt des Bahnprofils des eigenen Fahrzeugs mit dem Bahnprofil des Objekts wird ein Kollisionszeitpunkt bestimmt. Es erfolgt dann die Ausgabe einer Warnung an den Fahrer des eigenen Fahrzeugs.

Aus der US9959762B1 ist ein automatisches Notbremssystem bekannt, dass TTCbasiert arbeitet und je nach verbleibender Zeit bis zur Kollision eine Warnung, eine Teilbremsung und eine Notbremsung durchführt. Das Verfahren zum Erzeugen einer Warnung in einem Fahrzeug umfasst: Erhalten eines Abstands und einer relativen Geschwindigkeit des Fahrzeugs zu einem vorausfahrenden Zielfahrzeug; Erhalten einer Zeit, die für eine Kollision mit dem Zielfahrzeug erforderlich ist, aus der Entfernung und der relativen Geschwindigkeit; und Erzeugen einer Warnung, wenn mindestens eine erste Bedingung, bei der die für die Kollision erforderliche Zeit kleiner oder gleich einer vorbestimmten Warnungserzeugungszeit ist, erfüllt ist und eine zweite Bedingung, bei der die Entfernung gleich oder kleiner als eine vorbestimmte Warnerzeugungsentfernung ist.

Der Erfindung liegt daher die Aufgabe zugrunde, ein Verfahren zur Notbremsung und ein Notbremssystem zu schaffen, die eine hohe Sicherheit ermöglichen.

Diese Aufgabe wird durch ein Verfahren und ein Notbremssystem nach den unabhängigen Ansprüchen gelöst. Die Unteransprüche beschreiben bevorzugte Weiterbildungen.

Das erfindungsgemäße Verfahren kann insbesondere mit einem erfindungsgemäßen Notbremssystem durchgeführt werden; das erfindungsgemäße Notbremssystem kann insbesondere ein erfindungsgemäßes Verfahren einsetzen.

Das AEBS-System weist allgemein einen Bereitschafts-Modus auf, in dem zumindest Kritikalitäts-Kriterien überprüft werden, bei deren Erfüllen eine Notbremssituation erkannt wird, d.h. ein sich ohne zusätzliche Bremseingriffe ereignender bzw. wahrscheinlicher Unfall oder auch ein sich ereignender Unfall, dessen Unfallschwere gegebenenfalls verringert werden kann. Bei Erfüllen der Kritikalitäts-Kriterien schaltet das AEBS-System von dem Bereitschaftsmodus in einen aktiven Modus um, und zwar in Abhängigkeit von Zielerfassungssituations-Kriterien in einen AEBS- Standard-Modus (AEBS-Modus) oder einen aktiven AEBS-Folge-Modus.

Somit ist vorgesehen, die herkömmliche AEBS-Kaskade eines aktiven AEBS-Standard-Modus (AEBS-Modus) abzukürzen und einen aktiven AEBS-Folge-Modus einzuleiten, wenn eine sichere Zielerfassungssituation erfasst wird, die durch Zielerfassungssituations-Kriterien definiert ist. Die Zielerfassungssituations-Kriterien beziehen sich hierbei insbesondere auf das erfasste vordere Objekt und bewerten die derzeitige Fahrtsituation hinter dem erfassten vorderen Objekt. Dem liegt der Gedanke zugrunde, dass objektive Kriterien definiert werden können, die eine hinreichende Sicherheit garantieren können, dass eine Verkürzung der herkömmlichen AEBS-Kaskade keine bzw. keine relevanten höheren Gefahren bewirkt, aber eine deutliche Verringerung der Unfallgefahr oder zumindest eine deutliche Verringerung der Unfallschwere ermöglicht.

Anders als in dem aktiven AEBS-Modus mit der AEBS-Kaskade aus einer Folge Warnung-Teilbremsung-Vollbremsung weist der aktive AEBS-Folge-Modus insbesondere keine vorausgehende Fahrerwarnung auf. Hierbei kann der AEBS-Folge-Modus direkt eine Vollbremsung einleiten oder zunächst eine Teilbremsung und dann die Vollbremsung.

Das derzeit nicht aktive, sich im Bereitschafts-Modus befindende AEBS kann gemäß einer Ausführungsform bereits laufend bewerten, ob die Zielerfassungssituations-Kriterien erfüllt sind und daher eine Zielerfassungssituation vorliegt; somit kann dann bei Feststellen einer Notbremssituation direkt entweder der herkömmliche aktive AEBS-Modus oder der aktive AEBS-Folge-Modus eingeleitet werden.

Alternativ hierzu kann das AEBS erst bei Feststellen einer Notbremssituation die Bewertung, ob eine Zielerfassungssituation vorliegt oder nicht, vornehmen und dann auf aktuelle Messdaten und in einem vorausgehenden Zeitraum ermittelte, zwischengespeicherte Messdaten zurückgreifen.

Der Fahrer kann darüber informiert werden, wenn derzeit eine Zielerfassungssituation festgestellt ist, d.h. insbesondere wenn bei sich derzeit im Bereitschafts-Modus befindenden AEBS die Zielerfassungssituations-Kriterien erfüllt sind. Ein aktives Einschalten durch den Fahrer in einer Notbremssituation ist jedoch nicht vorgesehen.

Grundsätzlich kann das erfindungsgemäße Verfahren unabhängig von einem vorgesehenen ACC vorgesehen sein. Somit kann bei herkömmlicher Fahrt ohne ACC durch das Notbremssystem unterschieden werden, ob eine herkömmliche Situation oder eine Zielerfassungssituation vorliegt.

Falls ein ACC vorgesehen und aktiv ist, können gemäß einer Ausführungsform Signale oder Ermittlungen des ACC, das als solches ein Komfortsystem und kein Sicherheitssystem darstellt, einbezogen werden, insbesondere wenn das ACC bereits eine Bewertung von einem der Zielerfassungssituations-Kriterien mit vornimmt bzw. eine Bewertung vornimmt, aus der eines oder mehrere der Zielerfassungssituations-Kriterien abgeleitet werden können.

Anders als bei einem Platooning-System liegt keine V2V zur Abstimmung des Bremsverhaltens des Vorderfahrzeugs und des Eigenfahrzeugs vor, so dass das Notbremssystem die Entscheidung, die AEBS-Kaskade abzukürzen, ohne eine derartige Abstimmung mit dem Vorderfahrzeug trifft.

Als geeignete Zielerfassungssituations-Kriterien sind insbesondere vorgesehen:
Gemäß einem ersten Zielerfassungssituations-Kriterium erfasst das Umfeld-Erfassungssystem, insbesondere die Radar-Einrichtung des Fahrzeugs, in dem Vorderraum vor dem Eigenfahrzeug ein sich in Fahrtrichtung des Eigenfahrzeugs fahrendes Vorderfahrzeug. Insbesondere beim Einsatz einer Radar-Einrichtung ergeben sich hierdurch deutliche Vorteile, da die Radar-Systemgrenzen insbesondere stationäre Objekte betreffen und bei bewegten Objekten im Allgemeinen Fehl-Erfassungen nicht auftreten. Wenn das vordere Objekt sich ebenfalls in der Fahrtrichtung bewegt, kann somit eine Folgefahrtsituation auch von unsichereren Situationen wie z.B. einem querenden Fahrzeug oder Personen unterschieden werden. Als "in Fahrtrichtung des Eigenfahrzeugs" ist hierbei insbesondere eine Bewegung des Vorderfahrzeugs zu bewerten, die auf der gleichen Fahrspur der Straße fährt, gegebenenfalls mit leichter Querkomponente. Vorzugsweise kann das Vorderfahrzeug insbesondere auf der gleichen Fahrspur auch in Querrichtung etwas versetzt fahren.

Gemäß einem zweiten Zielerfassungssituations-Kriterium wird das VorderFahrzeug mindestens eine Mindestzeit oder Mindest-Verfolgungszeit verfolgt, z. B. mit einer Object-Lifetime größer als 30 Sekunden. Somit kann automatisiert erkannt werden, dass das Vorderfahrzeug eine entsprechend gleichmäßige Fahrt durchführt, die eine hinreichende Sicherheit für die Bewertung des Vorderfahrzeugs ermöglicht. So können insbesondere auch kurzzeitig erfasste Objekte ausgeschlossen werden, die als nicht geeignet für eine sichere Zielerfassungssituation bewertet werden.

Gemäß einem drittes Zielerfassungssituations-Kriterium wird festgestellt, das in dem Mindest-Folgezeitraum immer das gleiche Objekt als Vorderfahrzeug erfasst wird, d. h. keine wechselnden Objekte.

Diese drei Zielerfassungssituations-Kriterien stellen somit insbesondere sicher, dass nicht Situationen vorliegen, in denen ein Fahrereingriff vorteilhaft sein könnte, da z.B. ein Objekt die Fahrbahn quert; in einer derartigen Situation kann der Fahrer gegebenenfalls besser abschätzen, ob er z.B. durch einen Lenkvorgang oder auch eine Teilbremsung oder gar keine Bremsung, oder durch eine Kombination eines Bremsvorgangs mit einem Lenkvorgang reagiert. Somit wird bei Nicht-Erfüllen eines der Zielerfassungssituations-Kriterien in dem herkömmlichen aktiven AEBS-Modus gemäß der AEBS-Kaskade eine Information an den Fahrer ausgegeben.

Weiterhin kann als weiteres, z.B. viertes Zielerfassungssituations-Kriterium vorgesehen sein, dass eine Relativ-Quergeschwindigkeit des Vorderfahrzeugs relativ zu dem Eigenfahrzeug unterhalb eines hierfür vorgesehenen Quergeschwindigkeits-Grenzwertes liegt. Hierdurch kann insbesondere das erste Kriterium der gleichen Fahrtrichtung noch ergänzt bzw. konkretisiert werden. Weiterhin kann hierdurch auch erfasst werden, dass das Vorderfahrzeug nicht gerade zu einem seitlichen Ausschervorgang ansetzt und gegebenenfalls nachfolgend einen Spurwechsel beabsichtigt.

Als weiteres, z.B. fünftes Zielerfassungssituations-Kriterium kann als Ausschlusskriterium das Feststellen eines Spurwechsels des Vorderfahrzeugs festgesetzt werden, d.h. insbesondere ein beabsichtigter oder bereits eingeleiteter Spurwechsel, z.B. mit Blinklicht-Anzeige durch das Vorderfahrzeug und/oder bereits teilweisem Verlassen der Fahrspur.

Als weiteres, z.B. sechstes Zielerfassungssituations-Kriterium kann vorgesehen sein, dass kein zweites Erfassungsobjekt zwischen das Eigenfahrzeug und das Vorderfahrzeug gelangt, insbesondere kein Einschervorgang eines zweiten Erfassungsobjektes vorliegt, z.B. von einer benachbarten Fahrspur. Hierbei wird erkannt, dass ein derartiger Einschervorgang zu komplexen Situationen führen kann und z.B. ein Ausweichvorgang durch den Fahrer Vorteile bringen kann.

Als weiteres, z.B. siebtes Zielerfassungssituations-Kriterium kann vorgesehen sein, dass das Vorderfahrzeug in einer Objektklasse, z. B. Truck, klassifiziert wird, die sich während des Mindest-Folgezeitraums nicht ändert. Somit kann ausgeschlossen werden, dass das vordere Objekt fehlerkannt wird.

Weitere Zielerfassungssituations-Kriterien können jeweils ein oder mehrere der folgenden Kriterien sein:
- Der - zeitliche und/oder räumliche - Abstand zu dem Vorderfahrzeug liegt innerhalb eines vorgegebenen Abstandsbereichs, so dass insbesondere nicht zu große Abstände, d.h. oberhalb eines oberen Grenz-Abstandswertes als sichere ZES erfasst werden, die zu einer schnellen Notbremsung führen.
- Eine Relativgeschwindigkeit des Vorderfahrzeugs zum Eigenfahrzeug liegt innerhalb eines vorgegebenen Geschwindigkeitstoleranzbereichs, um keine problematischen Situationen mit deutlich unterschiedlichen Geschwindigkeiten zu erfassen,
- Das Vorderfahrzeug wird in einer zulässigen Objektklasse, z. B. Truck oder PKW, klassifiziert, so dass insbesondere untypische Fahrzeug-Klassen, bei denen gegebenenfalls ein individuelles Handeln besser sein kann, ausgeschlossen werden können.
- Ein ACC ist bereits aktiv und regelt den Abstand zu dem Vorderfahrzeug auf einen ACC-Zielabstand; dies kann insbesondere vorgesehen sein, wenn eine kombinierte Regelung des AEBS (Sicherheitssystem) und ACC (Komfortsystem) in dem Fahrzeug vorliegt. Grundsätzlich ist ansonsten kein aktives ACC erforderlich.

Das erfindungsgemäße Notbremssystem weist somit insbesondere ein Umfeld-Erfassungssystem wie z.B. eine Radareinrichtung, und eine Steuereinrichtung zum Aufnehmen der Messsignale und Ausgeben von Steuersignalen insbesondere an die Fahrzeugbremsen auf.

Die Erfindung wird im Folgenden anhand der beiliegenden Zeichnungen an einer Ausführungsform näher erläutert. Es zeigen:
- Fig. 1: eine Seitenansicht einer Kolonne aus zwei Fahrzeugen mit Vorderfahrzeug und Eigenfahrzeug in Aufsicht;
- Fig. 2: die entsprechende Darstellung mit einscherendem Fahrzeug;
- Fig. 3: ein Blockdiagramm eines erfindungsgemäßen Regelsystems;
- Fig. 4: ein Flussdiagramm eines erfindungsgemäßen Verfahrens;
- Fig. 5: Zeitdiagramme der Geschwindigkeiten und Beschleunigungen im AEBS-Standard-Modus und AEBS-Folge-Modus ;

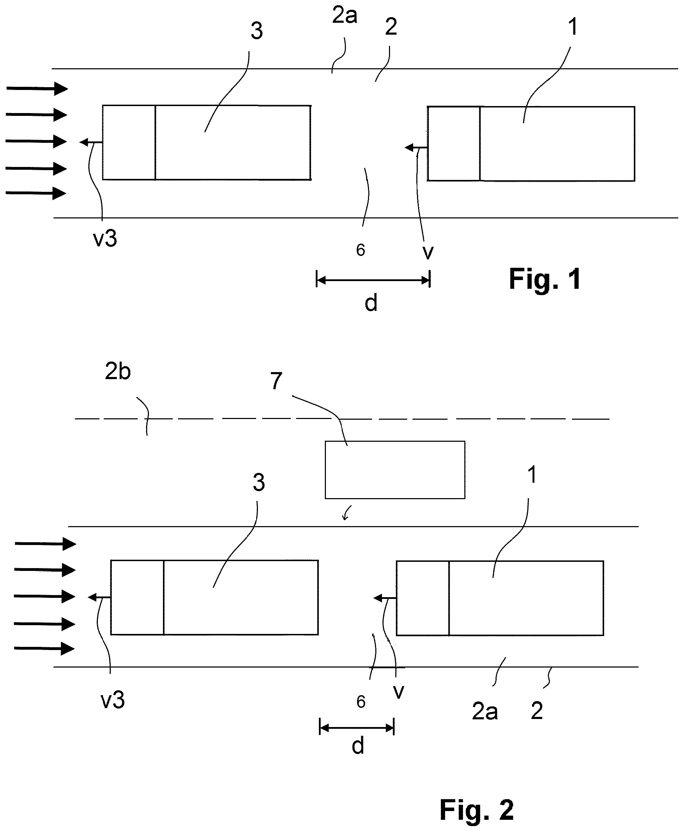

Ein Eigenfahrzeug 1 fährt auf einer Fahrbahn (Straße) 2, gemäß der Aufsicht der Fig. 2 auf einer eigenen Fahrspur 2a. in dem Vorderraum 6 vor dem Eigenfahrzeug 1 fährt ein Vorderfahrzeug 3, das mit dem Eigenfahrzeug 1 in keiner Datenverbindung bzw. keiner Datenverbindung unter autonomer Übertragung von Fahrdynamikdaten und/oder Steuersignalen für Fahrzeugeingriffe, insbesondere Bremsvorgängen steht.

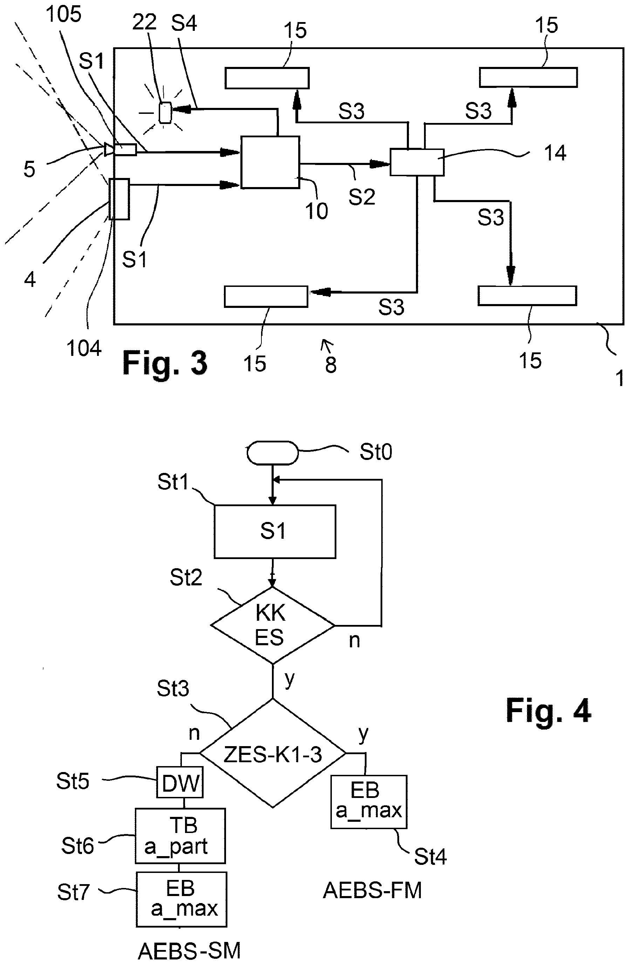

Das Eigenfahrzeug 1 weist gemäß Fig. 3 ein erstes Umfeld-Erfassungssystem 104 mit einer Radareinrichtung 4 auf, mit der ein Abstand d zu einem Vorderobjekt 3 erfasst werden kann. Ergänzend kann das Eigenfahrzeug 1 noch weitere Umfeld-Erfassungssysteme aufweisen, z. B. ein zweites Umfeld-Erfassungssystem 105 mit einer Kamera 5, mit der das Vorderobjekt 3 auch qualitativ erfasst und gegebenenfalls klassifiziert werden kann. Das Eigenfahrzeug 1 weist weiterhin ein automatisches Notbremssystem, d.h. Advanced Emgergency Brake Systems (AEBS) 8 auf, das das erste Umfeld-Erfassungssystem 104 und eine Steuereinrichtung 10 aufweist, wobei die Steuereinrichtung 10 des Notbremssystems 8 erste Messsignale S1 der Radareinrichtung 4 und der Kamera 5 aufnimmt. Gemäß der gezeigten Ausbildung gibt die Steuereinrichtung 10 Brems-Anforderungssignale S2 an eine Brems-Steuereinrichtung 14 des Bremssystems, die dann Brems-Steuersignale S3 an Radbremsen 15 ausgibt; die Steuereinrichtung 10 kann aber insbesondere auch in die Brems-Steuereinrichtung 14 integriert sein, d.h. somit als einheitliche Steuereinrichtung 10,14 die Brems-Steuersignale S3 ausgeben.

Gegebenenfalls kann weiterhin ein autonomer Abstandsregel-Modus ACC eingestellt werden, bei dem in bekannter Weise über mindestens das erste Umfeld-Erfassungssystem 104, d. h. mit der Radareinrichtung 4, und ggf. auch über das zweite Umfeld-Erfassungssystem 105 mit der Kamera 5 der Vorderraum 6 erfasst wird, so dass ein konstanter räumlicher Abstand d und/oder zeitlicher Abstand dt bei konstanter Differenzgeschwindigkeit Δv = 0 zwischen dem Vorderfahrzeug 3 und dem Eigenfahrzeug 1 eingestellt werden kann, d. h. als autonomes Abstands-Haltesystem.

Grundsätzlich kann ergänzend auch ein Platooning-Modus möglich sein, bei dem das Eigenfahrzeug mit weiteren Fahrzeugen, z. B. dem Vorderfahrzeug 3, Signale austauscht. In dem nachfolgend beschriebenen Verfahren erfolgt jedoch keine Datenübertragung mit dem Vorderfahrzeug 3 vorgesehen, d.h. es liegt kein Platooning vor.

Das AEBS 8 nimmt in einem Bereitschafts-Modus die Messsignale S1 des Umfeld-Erfassungssystems 104 auf und bewertet anhand an sich bekannter Kritikalitäts-Kriterien KK, ob ein Unfall bevorsteht, d.h. insbesondere eine Kollision mit dem Vorderfahrzeug. Hierzu kann insbesondere ein Gleichungssystem der Abstände in zweiter Ordnung der Zeit aufgestellt werden, d.h. mit dem Abstand d, sowie den Geschwindigkeiten v (Eigengeschwindigkeit) und v3 des Vorderobjekts, sowie den Längsbeschleunigungen a und a3.

Hierbei stehen das Eigenfahrzeug 1 und das Vorderfahrzeug 3 in keinem Datenaustausch über die Einleitung von Bremsvorgängen.

Das AEBS 8 bzw. die Steuereinrichtung 10 bewertet weiterhin die jeweilige Fahrtsituation, um in Abhängigkeit dieser Bewertung seinen aktiven Zustand auszuwählen. Zunächst liegt eine Standard-Fahrtsituation SFS vor. In einer derartigen SFS schaltet die Steuereinrichtung 10 bei Erkennen, dass vorgegebene Kritikalitätskriterien KK erfüllt sind und daher eine Notbremssituation (emergency situation) ES vorliegt, d.h. ein Unfall sich ereignen wird und der Fahrer dies voraussichtlich nicht abwenden wird, d.h. zur Vermeidung eines Unfalls,
und grundsätzlich auch bei sicherem Feststellen eines Unfalls zur Verringerung der Unfallschwere,
selbsttätig einen aktiven AEBS-Standard-Modus AEBS-SM ein, der eine AEBS-Kaskade AEBS-K vorsieht aus Fahrerwarnung, Teilbremsung und Notbremsung. Somit wird der Fahrer zunächst gewarnt, damit er gegebenenfalls selbst geeignete Eingriffe in die Bremsen und/oder die Lenkung vornimmt, und dann erst eine Teilbremsung eingeleitet, woraufhin gegebenenfalls eine weitere Warnung erfolgt, und dann die Notbremsung als Vollbremsung.

Weiterhin ist vorgesehen, dass die Steuereinrichtung 10 selbsttätig die Fahrtsituation daraufhin bewertet, ob eine hinreichende Sicherheit bei der Bewertung der Folgefahrt hinter dem Vorderfahrzeug vorliegt, und insbesondere keine besonderen Anzeichen vorliegen, dass mit einer von einer Vollbremsung abweichenden Reaktion des Fahrers zu rechnen ist. Dann wird bewertet, dass eine Verkürzung der herkömmlichen AEBS-Kaskade AEBS-K keine bzw. keine relevanten höheren Gefahren bewirkt, aber eine deutliche Verringerung der Unfallgefahr oder zumindest eine deutliche Verringerung der Unfallschwere ermöglicht.

Das Flussdiagramm der Fig. 4 zeigt somit, dass
die Steuereinrichtung 10 gemäß Schritt St1 im Bereitschafts-Modus die Messsignale S1 aufnimmt,
in Schritt St2 entscheidet, ob Kritikalitäts-Kriterien KK erfüllt sind und eine Notbremssituation (emergency situation) ES vorliegt,
falls dies der Fall ist, nachfolgend in Schritt St3 entschieden wird,
ob die ZES-Kriterien bzw. Zielerfassungssituations-Kriterien (Entscheidungs-Kriterien) ZESK1 bis mindestens ZESK3, vorzugsweise auch die weiteren Zielerfassungssituations- Kriterien erfüllt sind,
falls diese erfüllt sind, gemäß Verzweigung y der Schritt St4 mit aktivem AEBS-Folge-Modus AEBS-FM eingeleitet wird, d.h. Vollbremsung EB mit maximaler (negativer) Beschleunigung a_max,
falls diese nicht erfüllt sind, nach Verzweigung n die Schritte St5, St6, St7 eingeleitet werden, die die AEBS-Kaskade des herkömmlichen aktiven AEBS bzw. AEBS-Standard-Modus AEBS-SM darstellen.

Hierbei kann auch Schritt St2 und St3 vertauscht sein, d.h. vorab eine Ermittlung erfolgen, ob eine Zielerfassungssituation ZES vorliegt, und dann bei Erfüllen von Schritt St2 die Schritte St4 oder aber St5 bis St7 eingeleitet werden.

In Schritt St3 soll insbesondere eine Folgefahrtsituation FS zu dem Vorderfahrzeug 3 erkannt werden, die eine hinreichende Sicherheit gewährt. Hierzu sind folgend Zielerfassungssituations-Kriterien ZESK vorgesehen:
Erstes Zielerfassungssituations-Kriterium ZESK1 : die Radareinrichtung 4 erfasst als vorderes Objekt ein Vorderfahrzeug 3, d. h. ein bewegtes Objekt, das in Fahrtrichtung F fährt, d.h. v_3 > 0.

Hierdurch wird insbesondere auch erreicht, dass die Radar-Systemgrenzen, die bei stationären Objekten problematisch sind, z. B. das fehlerhafte Erkennen von nicht relevant Objekten wie Brücken und z. B. auch Dreck, Papier oder Straßenkanten als Abstandsobjekte ausgeschlossen werden kann. Hierbei wird der Erkenntnis Rechnung getragen, dass das Erfassen bewegter Objekte 3 durch eine Radareinrichtung 4 sehr sicher ist.

Zweites Zielerfassungssituations-Kriterium ZESK2: das Vorderfahrzeug 3 wird über mindestens einen Mindest-Folgezeitraum t_min durchgehend erfasst,
drittes Zielerfassungssituations-Kriterium ZESK 3: in dem Mindest-Folgezeitraum tₘᵢₙ wird immer das gleiche Objekt als Vorderfahrzeug 3 erfasst wird, d. h. keine wechselnden Objekte.

Weiterhin können folgende Zielerfassungssituations-Kriterien ZESK vorgesehen sein:
Viertes Zielerfassungssituations-Kriterium ZESK4- eine Relativ-Quergeschwindigkeit Δvy des Vorderfahrzeugs 3 zu dem Eigenfahrzeug 1 liegt unterhalb eines Quergeschwindigkeits-Grenzwertes Δvy_tres,

Als weiteres, z.B. fünftes Zielerfassungssituations-Kriterium ZESK5 kann vorgesehen sein, dass das Vorderfahrzeug 3 keinen Spurwechsel beabsichtigt, einleitet oder durchführt. Ein derartiger Spurwechsel bzw. eine Absicht hierzu kann z.B. bei Erkennen eines aktiven Blinkers oder aus dem querdynamischen Fahrverhalten erkannt werden.

Als weiteres, z.B. sechstes Zielerfassungssituations-Kriterium ZESK6 kein zweites Erfassungsobjekt 7 bzw. kein drittes Objekt zwischen das Eigenfahrzeug 1 und das Vorderobjekt 3 gelangt, insbesondere kein Einschervorgang eines zweiten Erfassungsobjektes vorliegt, z.B. von einer benachbarten Fahrspur 2b, wie es in Fig. 2 gezeigt: falls detektiert wird, dass das zweite Erfassungsobjekt 7 einen Einschervorgang einleitet oder bereits durchführt, kann somit eine Zielerfassungssituation ausgeschlossen werden.

Als weiteres, z.B. siebtes Zielerfassungssituations-Kriterium ZESK7 kann vorgesehen sein, dass das Vorderfahrzeug 3 in einer Objektklasse OC, z. B. OC2 fürTruck, klassifiziert wird, die sich während des Mindest- Folgezeitraums tₘᵢₙ nicht ändert.

Weiterhin kann eines oder mehrere der folgenden Zielerfassungssituations - Kriterien ZESK vorgesehen sein:
Achtes Zielerfassungssituations-Kriterium ZESK8 - der räumliche oder zeitliche Abstand d, dt zu dem Vorderfahrzeug 3 ist annähernd konstant. Hierzu kann z.B. überprüft werden, ob eine zeitliche Änderung dd des räumlichen Abstandes d und/oder eine zeitliche Änderung ddt des zeitlichen Abstandes dt innerhalb eines Folgen-Abstandsbereichs von Δd_lim von ± 1 m, oder innerhalb eines zeitlichen Folgen- Abstandsbereichs Δt_lim von 0,1 Sekunden liegt; ein derartiger Wert wird als annähernd konstant bewertet.

Neuntes Zielerfassungssituations-Kriterium ZESK9 - eine Relativgeschwindigkeit Δv= v1 - v3, d. h. die Differenz der Eigengeschwindigkeit des Eigenfahrzeugs zu der Geschwindigkeit des Vorderfahrzeugs 3, liegt innerhalb eines vorgegebenen Geschwindigkeitstoleranzbereichs Δv_lim,

Zehntes Zielerfassungssituations-Kriterium ZESK10- das Vorderfahrzeug 3 wird in einer zulässigen Objektklasse OC, z. B. OC2 für Trucks, klassifiziert. Andere Fahrzeugtypen wie Pkw, Traktoren usw. sollen hierbei aus Sicherheitsgründen nicht herangezogen werden.

Elftes Zielerfassungssituations-Kriterium ZESK11- ein Abstandsregelsystem zur Einstellung eines automatischen Abstandsregel-Modus ACC, mit dem ein Abstand d, dt zu dem Vorderfahrzeug 3 geregelt wird, ist aktiv.

Die Steuereinrichtung 10 kann schon im Bereitschafts-Modus jeweils überprüfen, ob die erforderlichen Zielerfassungssituations-Kriterien erfüllt sind, um dann bei Feststellen einer Notfall-Situation sofort entweder den AEBS-Standard-Modus AEBS-SM oder den AEBS-Folge-Modus AEBS-FM einzustellen.

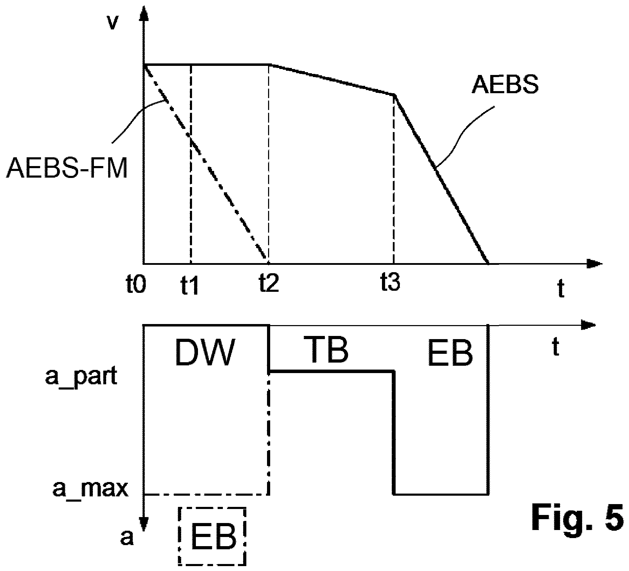

Fig. 5 zeigt einen Bremsvorgang im AEBS- Standard-Modus AEBS-SM und im AEBS-Folge-Modus AEBS-FM, jeweils als zeitliches Diagramm der Geschwindigkeit v und der Beschleunigung a, die hier nach unten aufgetragen ist, da Verzögerungen, d.h. negative Beschleunigungen, vorliegen.

In Fig. 5 detektiert die Radareinrichtung 4 zum Zeitpunkt t0 eine starke Verzögerung bzw. Notbremsung des Vorderfahrzeugs 3.

Im AEBS-Standard-Modus AEBS-SM führt die Steuereinrichtung 10 nicht sofort eine Notbremsung durch. Erst müssen gewisse Kritikalitätskriterien KK erfüllt sein, d.h. es muss kritisch genug sein. Wenn dies zum Zeitpunkt t1 erfüllt ist, wird erst das 1. Warnsignal an den Fahrer ausgegeben, dann zum Zeitpunkt t2 die 2. Warnung, die mit einer Teilbremsung TB mit teilweiser Beschleunigung (bzw. Abbremsung) a_part einhergeht und dann zum Zeitpunkt t3 die Vollbremsung EB mit (vom Betrag her) maximaler negativer Beschleunigung a_max.

Bei dem AEBS-Folge-Modus AEBS-FM kann die Steuereinrichtung 10 hingegen bei Erkennung einer Verzögerung des Vorderfahrzeuges 3 zum Zeitpunkt t0 sofort ein maximales (volles) Bremsmoment, d.h. eine Vollbremsung mit (vom Betrag her) maximaler Beschleunigung a_max einleiten und somit früher gemäß der strichpunktierten Linie schnell einen Stillstand erreichen.

### Bezugszeichenliste (Teil der Beschreibung)

- 1: Eigenfahrzeug
- 2: Fahrbahn, Straße
- 2a: eigene Fahrspur
- 3: Vorderobjekt, insbesondere Vorderfahrzeug
- 4: Radareinrichtung
- 5: Kamera
- 6: Vorderraum vor dem Eigenfahrzeug 1
- 7: drittes Objekt
- 8: Notbremssystem
- 10: Steuereinrichtung
- 14: Bremsensteuereinrichtung

- 15: Betriebsbremsen

- 22: Anzeigeeinrichtung

- 104: erstes Umfeld-Erfassungssystem, insbesondere mit Radareinrichtung 4

- 105: zweites Umfeld-Erfassungssystem, insbesondere mit Kamera 5

- a_max: maximale negative Beschleunigung bei Vollbremsung EB
- a_part: negative Teil_Beschleunigung bei Teilbremsung TB
- d: räumlicher Abstand des Eigenfahrzeugs 1 zum Vorderfahrzeug 3
- dt: zeitlicher Abstand des Eigenfahrzeugs 1 zum Vorderfahrzeug 3

- t1: erster Zeitpunkt, Zeitpunkt des Erfüllens der KK
- t2: zweiter Zeitpunkt, Zeitpunkt der 2. Warnung und/oder Einleitung der Teilbremsung
- t3: Zeitpunkt der Vollbremsung
- tₘᵢₙ: Mindest-Folgezeitraum

- ddt, dd: zeitliche Änderung des zeitlichen Abstandes dt
- ddt, dd: zeitliche Änderung des räumlichen Abstandes d

- Δ d_lim: räumlicher Abstandsbereich
- Δ t_lim: zeitlicher Abstandsbereich
- Δv_lim: vorgegebenen Geschwindigkeitstoleranzbereichs

- Δvy_tres: Quergeschwindigkeits-Grenzwert
- Δvy: Relativ-Quergeschwindigkeit
- Δv: Relativgeschwindigkeit
- KK: Kritikalitätskriterien für Notbremsung
- ACC: Adaptive Abstands-Regelung

- d_ACC: räumlicher ACC-Zielabstand
- t_ACC: zeitlicher ACC-Zielabstand

- AEBS-GM: AEBS-Bereitschaftsmodus

- AEBS-SM: AEBS-Standard-Modus (aktiv)
- AEBS-FM: AEBS-Folge-Modus (aktiv)
- AEBS-K: AEBS-Kaskade
- EB: Notbremsung
- ES: Notbremssituation
- TB: Teilbremsung
- F: Fahrtrichtung
- DW: Fahrerwarnung

- OC: Objektklasse
- OC2: Objektklasse LKW
- OC3: Objektklasse PKW
- SFS: Standard-Fahrsituation
- ZES: sichere Zielerfassungssituation
- ZESK: Zielerfassungssituations-Kriterium
- ZESK1 - ZESK11: erstes bis elftes Zielerfassungssituations-Kriterium

- S1: Messsignale
- S2: Brems-Anforderungssignale
- S3: Brems-Steuersignale
- S4: Anzeigesignal an den Fahrer bzw. die Anzeigeeinrichtung 22

## Patentansprüche

1. Verfahren zur Notbremsung eines Eigenfahrzeugs (1), bei dem ein erstes Umfeld-Erfassungssystem (104) des in einer Fahrtrichtung (F) fahrenden Eigenfahrzeugs (1) ein Objekt im Vorderraum (6) vor dem Eigenfahrzeug (1) erfasst, wobei ein autonomes Notbremssystem-System (AEBS) vorgesehen ist, das während der Fahrt außerhalb einer Notbremssituation (ES) in einem AEBS-Bereitschafts-Modus (AEBS-GM) ist und
wobei das autonome Notbremssystem-System (AEBS) bei Feststellen einer Notbremssituation (ES) außerhalb einer sicheren Zielerfassungssituation (ZES) in einen aktiven AEBS-Modus (AEBS-M) umgeschaltet wird mit einer AEBS-Kaskade (AEBS-K) aus einer ersten Fahrerwarnung (DW), einer nachfolgenden Teilbremsung (TB) und einer nachfolgenden Notbremsung (EB), **dadurch gekennzeichnet, dass** bei Erfassen des Objektes (3) in dem Vorderraum (6) festgestellt wird, dass eine sichere Zielerfassungssituation (ZES) vorliegt, (St3)
wenn mindestens folgende Zielerfassungssituations-Kriterien (ZES-K1-K3) erfüllt sind:
- das erfasste Objekt (3) ist ein in Fahrtrichtung (F) fahrendes Vorderfahrzeug (v_VF > 0) (ZESK1),
- das Vorderfahrzeug (3) wird über einen Mindest-Folgezeitraum (tₘᵢₙ) verfolgt (ZESK2),
- in dem Mindest-Folgezeitraum (tₘᵢₙ) wird das gleiche Vorderfahrzeug (3) verfolgt (ZESK3),
und
wobei das autonome Notbremssystem-System (AEBS) bei Feststellen einer Notbremssituation (ES) in einer sicheren Zielerfassungssituation (ZES) in einen aktiven AEBS-Folge-Modus (AEBS-FM) umgeschaltet wird, indem eine Notbremsung (EB) ohne Abwarten einer vorherigen Phase, in der eine Fahrerwarnung (DW) ausgegeben wird, durchgeführt wird.

2. Verfahren nach Anspruch 1, **dadurch gekennzeichnet, dass** in dem aktiven AEBS-Folge-Modus (AEBS-FM) die Notbremsung (EB) auch ohne Abwarten einer vorherigen Phase, in der eine Teilbremsung (TB) durchgeführt wird, eingeleitet wird.

3. Verfahren nach Anspruch 1 oder 2, **dadurch gekennzeichnet, dass** als weiteres Zielerfassungssituations-Kriterium (ZESK4) vorgesehen ist:
- eine Relativ-Quergeschwindigkeit (Δvy) des Vorderfahrzeugs (3) zu dem Eigenfahrzeug (1) liegt unterhalb eines Quergeschwindigkeits-Grenzwertes (Δvy_tres).

4. Verfahren nach einem der vorherigen Ansprüche, **dadurch gekennzeichnet, dass** als weiteres Zielerfassungssituations-Kriterium (ZESK5) vorgesehen ist, dass das Vorderfahrzeug (3) keinen Spurwechsel beabsichtigt, einleitet oder durchführt.

5. Verfahren nach einem der vorherigen Ansprüche, **dadurch gekennzeichnet, dass** als weiteres Zielerfassungssituations-Kriterium (ZESK6) vorgesehen ist, dass insgesamt oder in einem vorausprojizierten Zeitraum, z.B. dem Mindest-Folgezeitraum (tₘᵢₙ), kein zweites Erfassungsobjekt (7) zwischen das Eigenfahrzeug (1) und das Vorderobjekt (3) gelangt, insbesondere nicht ermittelt wird, dass ein Einschervorgang eines zweiten Erfassungsobjektes (7), z.B. von einer benachbarten Fahrspur (2b), beabsichtigt, eingeleitet oder durchgeführt wird.

6. Verfahren nach einem der vorherigen Ansprüche, **dadurch gekennzeichnet, dass** als weiteres Zielerfassungssituations-Kriterium (ZESK7) vorgesehen ist, dass das Vorderfahrzeug (3) in einer Objektklasse (OC), z. B. Truck (OC2), klassifiziert wird, die sich während des Mindest-Folgezeitraums (tₘᵢₙ) nicht ändert. (K6)

7. Verfahren nach einem der vorherigen Ansprüche, **dadurch gekennzeichnet, dass** das Eigenfahrzeug (1) und das Vorderfahrzeug (3) während des aktiven AEBS-Folge-Modus (AEBS-FM) in keinem Datenaustausch über die Einleitung von Bremsvorgängen stehen.

8. Verfahren nach einem der vorherigen Ansprüche, **dadurch gekennzeichnet, dass** eines oder mehrere der folgenden Zielerfassungssituations-Kriterien (ZESK) vorgesehen sind:
- der räumliche oder zeitliche Abstand (d, dt) zu dem Vorderfahrzeug (3) ist hinreichend konstant, z.B. liegt innerhalb eines vorgegebenen Abstandsbereichs (Δd_lim, Δt_lim) (ZESK8),
- eine Relativgeschwindigkeit (Δv) des Eigenfahrzeugs (1) zu dem Vorderfahrzeug (3) liegt innerhalb eines vorgegebenen Geschwindigkeitstoleranzbereichs (Δv_lim) (ZESK9),
- das Vorderfahrzeug (3) wird in einer zulässigen Objektklasse (OC), z. B. Truck (OC2) oder PKW (OC3), klassifiziert (ZESK10).

9. Verfahren nach einem der vorherigen Ansprüche, **dadurch gekennzeichnet, dass** als weiteres Zielerfassungssituations-Kriterium (ZESK11) vorgesehen ist, dass
- ein Abstandsregelsystem zur Einstellung eines automatischen Abstandsregel-Modus (ACC) aktiv ist, mit dem ein Abstand (d, dt) zu dem Vorderfahrzeug (3) auf einen ACC-Zielabstand (d_ACC, t_ACC) geregelt wird.

10. Verfahren nach einem der vorherigen Ansprüche, **dadurch gekennzeichnet, dass** das erste Umfeld-Erfassungssystem (104) ein Abstands-Messsystem zum Ermitteln des Abstandes (d) zu einem Vorderobjekt (3) aufweist, insbesondere ein Radar-Abstandsmesssystem (4), und ein zweites Umfeld-Erfassungssystem (105), insbesondere mit einer Kamera (5), zur eindeutigen Identifizierung des Vorderfahrzeugs (3) und/oder der Objektklasse (OC) des Vorderfahrzeugs (3) vorgesehen ist.

11. Verfahren nach einem der vorherigen Ansprüche, **dadurch gekennzeichnet, dass** bei Erfassen einer sicheren Zielerfassungs-Situation (ZES) ein Anzeigesignal (S4) an den Fahrer ausgegeben wird zur Information über aktiven AEBS-Folge-Modus (AEBS-FM) bei Erkennen einer Notbremssituation (ES).

12. Verfahren nach einem der vorherigen Ansprüche, **dadurch gekennzeichnet, dass** die Notbremssituation (ES) erkannt wird, wenn Kritikalitätskriterien (KK) erfüllt sind, wobei bei Nicht-Erfüllen der Kritikalitätskriterien (KK) eine Standard-Fahrsituation (SFS) mit dem AEBS-Bereitschafts-Modus (AEBS-GM) vorliegt.

13. Notbremssystem (8) für ein Eigenfahrzeug (1), wobei das Notbremssystem (8) aufweist:
ein erstes Umfeld-Erfassungssystem (104) zum Erfassen eines vorderen Umfeldes vor dem Eigenfahrzeug (1),
eine Steuereinrichtung (10), die Messsignale (S1) des ersten Umfeld-Erfassungssystems (104) aufnimmt und eingerichtet ist, ein Verfahren nach einem der vorherigen Ansprüche durchzuführen.

14. Notbremssystem (8) nach Anspruch 13, **dadurch gekennzeichnet, dass** das erste Umfeld-Erfassungssystem (104) ein Abstands- Messsystem, insbesondere mit einer Radareinrichtung (4), ist.

15. Notbremssystem (8) nach Anspruch 13 oder 14, **dadurch gekennzeichnet, dass** die Steuereinrichtung (10) weiterhin als ACC-Steuereinrichtung (10) ausgebildet ist zur Durchführung einer adaptiven Abstandsregelung (ACC).

## Claims

1. Method for emergency braking of an ego-vehicle (1), in which
a first environment detection system (104) of the ego-vehicle (1) traveling in a direction of travel (F) detects an object in the front space (6) in front of the ego-vehicle (1), an autonomous emergency braking system (AEBS) being provided which is in an AEBS standby mode (AEBS-GM) during travel outside an emergency braking situation (ES), and
the autonomous emergency braking system (AEBS) being switched over to an active AEBS mode (AEBS-M) if an emergency braking situation (ES) is detected outside a reliable target detection situation (ZES), using an AEBS cascade (AEBS-K) consisting of a first driver warning (DW), subsequent partial braking (TB) and subsequent emergency braking (EB), **characterized in that,** if the object (3) is detected in the front space (6), it is determined that a reliable target detection situation (ZES) is present (St3)
if at least the following target detection situation criteria (ZES-K1-K3) are fulfilled:
- the detected object (3) is a front vehicle (v_VF > 0) traveling in the direction of travel (F) (ZESK1),
- the front vehicle (3) is followed over a minimum following period (tₘᵢₙ) (ZESK2),
- in the minimum following period (tₘᵢₙ), the same front vehicle (3) is followed (ZESK3),
and
the autonomous emergency braking system (AEBS) being switched over to an active AEBS following mode (AEBS-FM) if an emergency braking situation (ES) is detected in a reliable target detection situation (ZES), in which mode emergency braking (EB) is carried out without waiting for a previous phase in which a driver warning (DW) is emitted.

2. Method according to claim 1, **characterized in that,** in the active AEBS following mode (AEBS-FM), the emergency braking (EB) is also initiated without waiting for a previous phase in which partial braking (TB) is carried out.

3. Method according to either claim 1 or claim 2, **characterized in that** it is provided as a further target detection situation criterion (ZESK4) that:
- a relative transverse speed (Δvy) of the front vehicle (3), relative to the ego-vehicle (1), is below a transverse speed limit value (Δvy_tres).

4. Method according to any of the preceding claims, **characterized in that** it is provided as a further target detection situation criterion (ZESK5) that the front vehicle (3) does not plan, initiate or carry out a change in lanes.

5. Method according to any of the preceding claims, **characterized in that** it is provided as a further target detection situation criterion (ZESK6) that overall or in a pre-projected period, for example the minimum following period (tₘᵢₙ), no second detection object (7) passes between the ego-vehicle (1) and the front object (3), in particular that it is not determined that a merging action of a second detection object (7), for example from an adjacent lane (2b), is planned, initiated or carried out.

6. Method according to any of the preceding claims, **characterized in that** it is provided as a further target detection situation criterion (ZESK7) that the front vehicle (3) is classified in an object class (OC), for example truck (OC2), which does not change during the minimum following period (tₘᵢₙ). (K6)

7. Method according to any of the preceding claims, **characterized in that** the ego-vehicle (1) and the front vehicle (3) do not exchange data regarding the initiation of braking processes during the active AEBS following mode (AEBS-FM).

8. Method according to any of the preceding claims, **characterized in that** one or more of the following target detection situation criteria (ZESK) are provided:
- the spatial or temporal distance (d, dt) to the front vehicle (3) is sufficiently constant, for example is within a predetermined distance range (Δd_lim, Δt_lim) (ZESK8),
- a relative speed (Δv) of the ego-vehicle (1) to the front vehicle (3) is within a predetermined speed tolerance range (Δv_lim) (ZESK9),
- the front vehicle (3) is classified in a permissible object class (OC), for example truck (OC2) or passenger car (OC3) (ZESK10).

9. Method according to any of the preceding claims, **characterized in that** it is provided as a further target detection situation criterion (ZESK11) that a distance regulation system for setting an automatic distance regulation mode (ACC) is active, with which system a distance (d, dt) to the front vehicle (3) is regulated to an ACC target distance (d_ACC, t_ACC).

10. Method according to any of the preceding claims, **characterized in that** the first environment detection system (104) has a distance measuring system for determining the distance (d) to a front object (3), in particular a radar distance measuring system (4), and a second environment detection system (105), in particular comprising a camera (5), is provided for the clear identification of the front vehicle (3) and/or the object class (OC) of the front vehicle (3).

11. Method according to any of the preceding claims, **characterized in that** if a reliable target detection situation (ZES) is detected, a display signal (S4) is emitted to the driver to inform them about the active AEBS following mode (AEBS-FM) when an emergency braking situation (ES) is detected.

12. Method according to any of the preceding claims, **characterized in that** the emergency braking situation (ES) is detected if criticality criteria (KK) are met; if the criticality criteria (KK) are not met, a standard driving situation (SFS) with the AEBS standby mode (AEBS-GM) is present.

13. Emergency braking system (8) for an ego-vehicle (1), wherein the emergency braking system (8) comprises:
a first environment detection system (104) for detecting a front environment in front of the ego-vehicle (1),
a control device (10) which receives measurement signals (S1) from the first environment detection system (104) and is designed to carry out a method according to any of the preceding claims.

14. Emergency braking system (8) according to claim 13,
**characterized in that** the first environment detection system (104) is a distance measuring system, in particular comprising a radar device (4).

15. Emergency braking system (8) according to either claim 13 or claim 14, **characterized in that** the control device (10) is further designed as an ACC control device (10) for performing adaptive cruise control (ACC).

## Revendications

1. Procédé permettant le freinage d'urgence d'un véhicule personnel (1), dans lequel
un premier système de détection d'environnement (104) du véhicule personnel (1) en déplacement dans un sens de déplacement (F) détecte un objet dans l'espace frontal (6) devant le véhicule personnel (1), un système autonome de système de freinage d'urgence (AEBS) étant prévu, lequel se trouve dans un mode veille AEBS (AEBS-GM) pendant le déplacement en dehors d'une situation de freinage d'urgence (ES), et
lorsqu'une situation de freinage d'urgence (ES) est déterminée en dehors d'une situation de détection de cible (ZES) sûre, le système autonome de système de freinage d'urgence (AEBS) étant commuté dans un mode AEBS (AEBS-M) actif avec une cascade AEBS (AEBS-K) constituée d'un premier avertissement au conducteur (DW), d'un freinage partiel (TB) subséquent et d'un freinage d'urgence (EB) subséquent, **caractérisé en ce que,** lors de la détection de l'objet (3) dans l'espace frontal (6), il est déterminé qu'il existe une situation de détection de cible (ZES) sûre, (St3)
lorsqu'au moins les critères de situation de détection de cible (ZES-K1-K3) suivants sont remplis :
- l'objet (3) détecté est un véhicule qui précède (v_VF > 0) en déplacement dans le sens de déplacement (F) (ZESK1),
- le véhicule qui précède (3) est suivi pendant une période de suivi minimale (tₘᵢₙ) (ZESK2),
- au cours de la période de suivi minimale (tₘᵢₙ), le même véhicule qui précède (3) est suivi (ZESK3),
et
lorsqu'une situation de freinage d'urgence (ES) est déterminée dans une situation de détection de cible (ZES) sûre, le système autonome de système de freinage d'urgence (AEBS) étant commuté dans un mode de suivi AEBS (AEBS-FM) actif en effectuant un freinage d'urgence (EB) sans attendre une phase précédente dans laquelle un avertissement au conducteur (DW) est transmis.

2. Procédé selon la revendication 1, **caractérisé en ce que,** dans le mode de suivi AEBS (AEBS-FM) actif, le freinage d'urgence (EB) est également initié sans attendre une phase précédente dans laquelle un freinage partiel (TB) est effectué.

3. Procédé selon la revendication 1 ou 2, **caractérisé en ce que** le critère suivant est prévu comme critère de situation de détection de cible supplémentaire (ZESK4) :
- une vitesse transversale relative (Δvy) du véhicule qui précède (3) par rapport au véhicule personnel (1) est située en dessous d'une valeur limite de vitesse transversale (Δvy_tres).

4. Procédé selon l'une des revendications précédentes,
**caractérisé en ce que,** comme critère de situation de détection de cible supplémentaire (ZESK5), il est prévu que le véhicule qui précède (3) n'envisage, n'initie ou n'effectue aucun changement de voie.

5. Procédé selon l'une des revendications précédentes,
**caractérisé en ce que,** comme critère de situation de détection de cible supplémentaire (ZESK6), il est prévu que, de manière générale ou au cours d'une période projetée à l'avance, par ex. la période de suivi minimale (tₘᵢₙ), aucun second objet de détection (7) ne se trouve entre le véhicule personnel (1) et l'objet (3) qui précède, en particulier, il n'est pas défini qu'un rabattement d'un second objet de détection (7), par ex. depuis une voie (2b) adjacente, soit envisagé, initié ou effectué.

6. Procédé selon l'une des revendications précédentes,
**caractérisé en ce que,** comme critère de situation de détection de cible supplémentaire (ZESK7), il est prévu que le véhicule qui précède (3) soit classé dans une catégorie d'objet (OC), par ex. les camions (OC2), qui ne change pas pendant la période de suivi minimale (tₘᵢₙ). (K6)

7. Procédé selon l'une des revendications précédentes,
**caractérisé en ce que,** dans le mode de suivi AEBS (AEBS-FM) actif, le véhicule personnel (1) et le véhicule qui précède (3) n'échangent aucune donnée concernant l'initiation de processus de freinage.

8. Procédé selon l'une des revendications précédentes,
**caractérisé en ce qu'**un ou plusieurs des critères de situation de détection de cible (ZESK) suivants sont prévus :
- la distance spatiale ou temporelle (d, dt) par rapport au véhicule qui précède (3) est suffisamment constante, par ex. est située dans une plage de distance (Δd_lim, Δt_lim) prédéfinie (ZESK8),
- une vitesse relative (Δv) du véhicule personnel (1) par rapport au véhicule qui précède (3) est située dans une plage de tolérance de vitesse (Δv_lim) prédéfinie (ZESK9),
- le véhicule qui précède (3) est classé dans une catégorie d'objet (OC) acceptable, par ex. les camions (OC2) ou les voitures de
tourisme (OC3) (ZESK10).

9. Procédé selon l'une des revendications précédentes,
**caractérisé en ce que,** comme critère de situation de détection de cible supplémentaire (ZESK11), il est prévu que - un système de réglage de distance destiné à configurer un mode de réglage de distance (ACC) automatique est actif, au moyen duquel système une distance (d, dt) par rapport au véhicule qui précède (3) est réglée sur une distance cible ACC (d_ACC, t_ACC).

10. Procédé selon l'une des revendications précédentes,
**caractérisé en ce que** le premier système de détection d'environnement (104) présente un système de mesure de distance destiné à définir la distance (d) par rapport à un objet (3) qui précède, en particulier un système de mesure de distance par radar (4), et un second système de détection d'environnement (105), comportant en particulier une caméra (5) et destiné à identifier de manière univoque le véhicule qui précède (3) et/ou la catégorie d'objet (OC) du véhicule qui précède (3), est prévu.

11. Procédé selon l'une des revendications précédentes,
**caractérisé en ce que,** lors de la détection d'une situation de détection de cible (ZES) sûre, un signal d'affichage (S4) est transmis au conducteur pour l'informer du mode de suivi AEBS (AEBS-FM) actif en cas de constatation d'une situation de freinage d'urgence (ES).

12. Procédé selon l'une des revendications suivantes, **caractérisé en ce que** la situation de freinage d'urgence (ES) est constatée lorsque des critères de criticité (KK) sont remplis, dans le cas où les critères de criticité (KK) ne sont pas remplis, une situation de déplacement standard (SFS) étant présente avec le mode veille AEBS (AEBS-GM).

13. Système de freinage d'urgence (8) pour un véhicule personnel (1), le système de freinage d'urgence (8) présentant :
un premier système de détection d'environnement (104) destiné à détecter un environnement avant devant le véhicule personnel (1),
un dispositif de commande (10) qui enregistre des signaux de mesure (S1) du premier système de détection d'environnement (104) et est configuré pour effectuer un procédé selon l'une des revendications précédentes.

14. Système de freinage d'urgence (8) selon la revendication 13,
**caractérisé en ce que** le premier système de détection d'environnement (104) est un système de mesure de distance, en particulier comportant un dispositif radar (4).

15. Système de freinage d'urgence (8) selon la revendication 13 ou 14, **caractérisé en ce que** le dispositif de commande (10) est également conçu comme dispositif de commande ACC (10) destiné à effectuer un réglage de distance adaptatif (ACC).
